# FASCICULE DE BREVET EUROPEEN

(11) **EP 2 638 317 B1**
(45) Date de publication et mention de la délivrance du brevet: **11.03.2015**
(21) Numéro de dépôt: 11794540.2
(22) Date de dépôt: 09.11.2011
(51) Int. Cl.: F16L 39/00, F16L 19/00

(54) **DISPOSITIF DE RACCORDEMENT SECURISE DE DEUX EMBOUTS, NOTAMMENT D'UNE CANALISATION**
VORRICHTUNG ZUR GESICHERTEN VERBINDUNG ZWEIER ANSCHLUSSSTÜCKE, INSBESONDERE EINES ROHRES
DEVICE FOR THE SECURED CONNECTION OF TWO END FITTINGS, PARTICULARLY OF A PIPE

(30) Priorité: 09.11.2010 FR 1059238
(43) Date de publication de la demande: 18.09.2013
(73) Titulaire: JPB Système, 77170 Brie-Comte-Robert (FR)
(72) Inventeur: MARC, Damien, F-77370 Nangis (FR)
(74) Mandataire: Pontet Allano & Associes
(86) Numéro de dépôt international: PCT/FR2011/052612
(87) Numéro de publication internationale: WO 2012/063000

(56) Documents cités:
- EP-A2- 1 571 385
- WO-A1-2004/010041
- US-A1- 2006 061 094

## Description

### Domaine de l'invention :

L'invention concerne un dispositif de raccordement entre deux embouts, notamment des embouts de canalisation.

### Etat de la technique et problèmes soulevés :

Le dispositif de raccordement a pour fonction d'assurer le raccordement mécanique par vissage d'un premier embout sur un second embout, et d'éviter le dévissage intempestif entre les éléments, notamment dans les applications où les éléments sont soumis en service à des vibrations ou trépidations. De tels dipositif sont connus de WO 2004 010041 A, EP 1571 385A ou encore US 2006 061094A.

L'invention vise plus particulièrement mais non limitativement des embouts standardisés de canalisations à raccorder, l'un des embouts ayant un mamelon destiné à être pressé dans un évasement correspondant de l'autre embout, par exemple un ajutage, sous l'action de serrage d'un écrou prisonnier de l'un des embouts et venant en prise avec un filetage formé sur l'autre embout.

L'un des embouts à raccorder peut comprendre une zone pourvue de plusieurs concavités, désignant toute forme en creux (par rapport à un relief ou à une surface extérieure de l'embout) régulièrement réparties à sa périphérie sur un angle de 360° autour de l'axe longitudinal de l'embout, ces concavités étant destinées à recevoir des moyens anti-rotation ou tout au moins aptes à freiner la rotation relative entre les éléments lors d'un dévissage intempestif. On connaît des dispositifs de raccordement pourvus de billes ou de pistons mobiles aptes à pénétrer dans ces concavités ou à s'en extraire sous l'influence d'un couple de rotation supérieur à un seuil donné, ces moyens permettant de s'opposer à la rotation intempestive entre les éléments pour un couple inférieur à ce seuil. Néanmoins, ces moyens sont complexes, coûteux, constitués d'une multitude d'éléments et impliquent un montage long et délicat. En outre, ils peuvent générer des dysfonctionnements en cas de casse, par exemple un coincement d'une pièce dans l'une des concavités empêchant alors le dévissage volontaire des éléments.

Suivant le brevet US 6,857,665 B2, un ressort formé par un fil métallique ondulé dans un plan radial est logé dans une rainure périphérique intérieure de l'écrou. Pour empêcher le dévissage intempestif, les lobes définis par les ondulations du fil interfèrent avec des cannelures formées autour de l'extrémité de l'embout portant l'écrou. Le pas angulaire des lobes est différent de celui des cannelures. Ainsi, les lobes interfèrent les uns après les autres avec une cannelure respective. A chaque fois un lobe qui franchit le sommet d'une cannelure s'aplatit et il en résulte l'allongement de la dimension circonférentielle du ressort. Ce dispositif ne permet pas un verrouillage efficace car le pas angulaire entre deux portions de blocage est extrêmement petit et la variation de l'énergie de déformation du ressort entre deux positions de blocage est faible. La rainure doit être relativement profonde et affaiblit l'écrou.

### But de l'invention :

L'invention a pour but de pallier tout ou partie des inconvénients précédents.

### Objet(s) de l'invention :

A cet effet, l'invention a pour objet un dispositif de raccordement d'un premier embout sur un second embout, notamment d'une canalisation, le dispositif comprenant un écrou pourvu à une première extrémité d'un alésage fileté dans lequel est vissé le premier embout suivant un axe longitudinal jusqu'à une position de serrage dans laquelle le premier embout est en contrainte axiale avec le second embout reçu dans l'écrou, cet écrou et le second embout étant conformés pour limiter le déplacement axial de l'écrou par rapport au second embout dans la direction de vissage de l'écrou, caractérisé en ce qu'il comprend des moyens anti-rotation disposés entre l'écrou et au moins l'un du premier et du second embouts, dit embout de blocage, ces moyens anti-rotation étant constitués d'au moins une lamelle disposée autour de l'embout de blocage et s'étendant sur un secteur angulaire déterminé autour de l'axe longitudinal, ladite lamelle comprenant au moins une protubérance découpée dans son épaisseur, qui est apte à pénétrer radialement et de façon élastique dans au moins une concavité, lors de la rotation relative entre l'écrou et l'embout de blocage, et à en ressortir lorsqu'un couple rotatif dépassant un seuil déterminé est appliqué entre l'écrou et l'embout de blocage, la lamelle et la concavité étant respectivement montées et conformées sur l'écrou et sur l'embout de blocage ou inversement.

Chaque lamelle du dispositif supporte une ou plusieurs protubérances et constitue un moyen monobloc, sûr et peu coûteux à réaliser. L'écrou comprenant une ou plusieurs lamelles de ce type est extrêmement compact et peu encombrant radialement puisque la lamelle est disposée dans l'écrou de façon à présenter son épaisseur (relativement faible) suivant la direction radiale. Le montage de chaque lamelle à l'intérieur de l'écrou est rapide et aisé. Ce dispositif constitue ainsi un moyen de raccordement autobloquant particulièrement optimisé.

Selon d'autres caractéristiques avantageuses de l'invention, l'embout de blocage est le second embout.

Selon encore d'autres caractéristiques avantageuses de l'invention, la lamelle est montée avec une forme arquée à l'intérieur de l'écrou tandis que la concavité est conformée sur la périphérie de l'embout de blocage.

Selon encore d'autres caractéristiques avantageuses de l'invention, le dispositif comprend au moins deux lamelles, notamment métalliques, se joignant bout à bout à leurs extrémités et s'étendant globalement sur un secteur angulaire de 360° autour de l'axe longitudinal.

Selon encore d'autres caractéristiques avantageuses de l'invention, chaque lamelle comporte à ses extrémités une extension radiale pénétrant dans une lumière correspondante formée dans le corps de l'écrou, afin d'empêcher toute rotation relative entre la lamelle et l'écrou.

Selon encore d'autres caractéristiques avantageuses de l'invention, l'écrou comporte une gorge intérieure recevant la lamelle.

Selon encore d'autres caractéristiques avantageuses de l'invention, chaque lamelle comporte une extension axiale coopérant avec au moins une saillie formée à l'intérieur de l'écrou, afin d'empêcher tout mouvement relatif entre la lamelle et l'écrou.

Selon encore d'autres caractéristiques avantageuses de l'invention, l'extension axiale comporte une région placée entre deux saillies. Cette disposition constitue un moyen de blocage bilatéral en rotation.

Selon encore d'autres caractéristiques avantageuses de l'invention, l'au moins une saillie est engagée dans une fenêtre de forme correspondante de l'extension axiale. Cette disposition constitue un moyen de blocage bilatéral en rotation, ainsi qu'un moyen de blocage en translation.

Selon encore d'autres caractéristiques avantageuses de l'invention, la lamelle est montée sur une troisième zone cylindrique de guidage.

Selon encore d'autres caractéristiques avantageuses de l'invention, l'écrou comporte au moins une entaille intérieure permettant à l'au moins une protubérance de se déplacer radialement vers l'extérieur pour radialement de l'au moins une concavité.

Selon encore d'autres caractéristiques avantageuses de l'invention, chaque protubérance est délimitée par une découpe ayant la forme générale d'un U, la protubérance étant obtenue par emboutissage, suivant une forme sphérique, de la matière située entre les branches du U, en direction de l'axe longitudinal. La forme sphérique des protubérances permet de maîtriser et de franchir avec finesse les points durs générés lors du déplacement rotatif entre l'écrou et l'embout de blocage (par un effet de rampe à la base des formes sphérique), lorsqu'un couple supérieur à un seuil donné est appliqué. Cette faculté est non seulement présente en rotation, mais également en translation selon l'axe longitudinal de l'écrou et de l'embout de blocage, lorsqu'il est nécessaire de faire coulisser l'embout de blocage à l'intérieur de l'écrou pour mettre en place des moyens d'étanchéité. En effet, dans ce dernier cas, l'ajustement entre l'embout de blocage et l'écrou rend nécessaire que les moyens anti-rotation franchissent sans difficulté et sans accroc les obstacles sur la forme extérieure de l'embout de blocage (épaulement etc.).

Selon encore d'autres caractéristiques avantageuses de l'invention, chaque découpe ayant la forme générale d'un U, les extrémités des branches du U sont débouchent dans des trous traversant la lamelle (14).

Selon encore d'autres caractéristiques avantageuses de l'invention, le dispositif comprend entre quatre et huit protubérances réparties sur un secteur angulaire de 360° par rapport à l'axe longitudinal, et entre huit et quatorze concavités conformées pour recevoir lesdites protubérances.

Selon encore d'autres caractéristiques avantageuses de l'invention, la lamelle a une épaisseur inférieure à 5 mm, par exemple de 1 à 2 mm, et en ce que chaque protubérance s'élève d'une hauteur inférieure à 5 mm par rapport à une zone adjacente de la lamelle, cette hauteur étant par exemple comprise entre 1 et 2 mm.

Selon encore d'autres caractéristiques avantageuses de l'invention, chaque lumière est réalisée de façon débouchante entre l'intérieur et l'extérieur de l'écrou, la zone débouchant à l'extérieur étant rebouchée par un cordon de soudure, notamment à des fins d'étanchéité.

Selon encore d'autres caractéristiques avantageuses de l'invention, chaque protubérance est supportée par une languette délimitée par une découpe ayant la forme générale d'un U, l'extrémité libre de la languette étant recourbée de façon à présenter un bossage dirigé du côté opposé à la protubérance.

Selon un autre aspect de l'invention, l'invention a pour objet un embout pour la mise en oeuvre d'un dispositif de raccordement selon l'une quelconque des revendications précédentes, caractérisé en ce qu'il comporte des concavités ayant la forme de pans agencés selon une forme polygonale.

### Description détaillée de l'invention :

L'invention sera mieux comprise à la lecture de la description qui va suivre d'un mode de réalisation non limitatif de l'invention et à la lumière des dessins annexés sur lesquels :
- la figure 1 représente une vue en perspective du dispositif de raccordement selon un premier mode de réalisation de l'invention monté sur les premier et second embouts,
- la figure 2 représente une vue en perspective éclatée du dispositif de la figure 1 et des embouts,
- la figure 3 représente une vue en perspective du premier embout de la figure 1,
- les figures 4 et 5 sont des vues respectivement en perspective et à plat d'une lamelle selon le premier mode de réalisation de l'invention pourvue de protubérances selon l'invention,
- les figures 6 et 7 sont des vues en perspective respectivement extérieure et suivant un plan de coupe longitudinal de l'écrou selon le premier mode de réalisation de l'invention,
- la figure 8 est une vue à plat suivant un plan de coupe longitudinal de l'écrou des figures 6 et 7,
- la figure 9 est une vue en perspective suivant un plan de coupe longitudinal de l'écrou selon le premier mode de réalisation de l'invention, dans lequel est montée une lamelle selon l'invention,
- les figures 10 à 12 représentent des vues chronologiques du procédé de montage et de mise en place du dispositif de raccordement selon le premier mode de réalisation de l'invention sur les deux embouts,
- la figure 13 illustre un autre mode de réalisation d'une lamelle selon l'invention,
- la figure 14 représente une vue en perspective éclatée du dispositif de raccordement selon un deuxième mode de réalisation de l'invention monté sur les premier et second embouts,
- la figure 15 est une vue en perspective suivant un plan de coupe longitudinal de l'écrou et de la lamelle selon le deuxième mode de réalisation de l'invention, et
- la figure 16 est une vue à plat suivant un plan de coupe longitudinal du dispositif de raccordement de la figure 14.

Ces modes de réalisation étant nullement limitatifs, on pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à de l'état de la technique antérieur. Cette sélection comprend au moins une caractéristique de préférence fonctionnelle sans détails structurels, ou avec seulement une partie des détails structurels si c'est cette partie uniquement est suffisante pour conférer un avantage technique ou pour différencier l'invention par rapport à l'état de la technique antérieur.

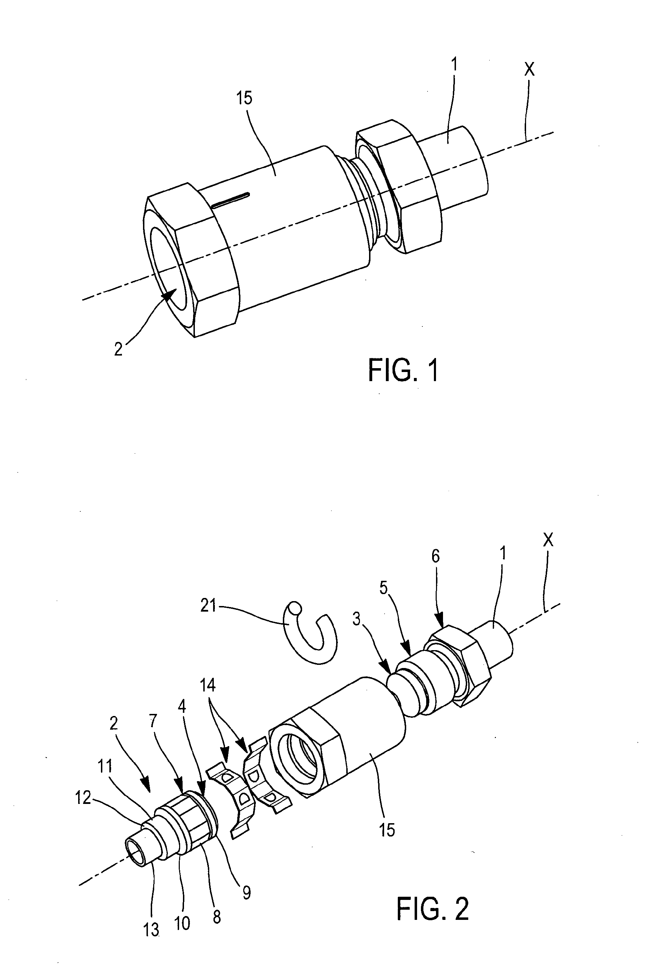

On a représenté aux figures 1 et 2 un dispositif de raccordement entre un premier embout 1 et un second embout 2 qui sont typiquement des embouts montés sur des tronçons d'une canalisation raccordés l'un à l'autre. Les embouts sont donc creux pour assurer la continuité de la canalisation. Cet assemblage s'étend suivant un axe longitudinal X.

Le premier embout 1 comprend un mamelon 3 de forme ovoïde destiné à être pressé dans un évasement 4 de forme tronconique du second embout 2, cet assemblage étant destiné à assurer une liaison étanche entre les deux embouts 1, 2.

A partir du mamelon 3, le premier embout 1 comprend un filetage mâle 5 puis une collerette portant sur sa périphérie une conformation de prise de rotation 6 telle qu'une conformation à six-pans.

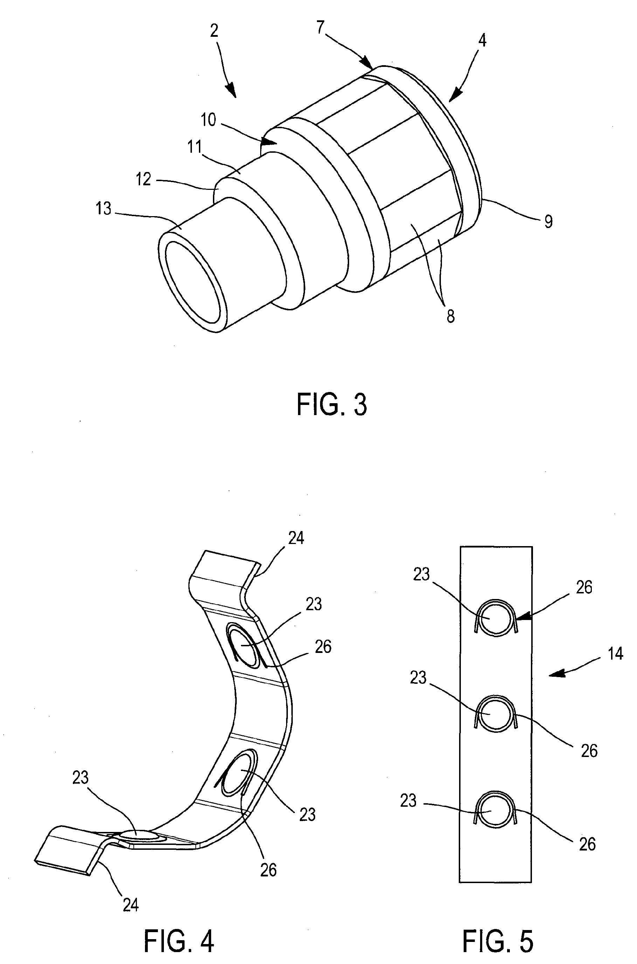

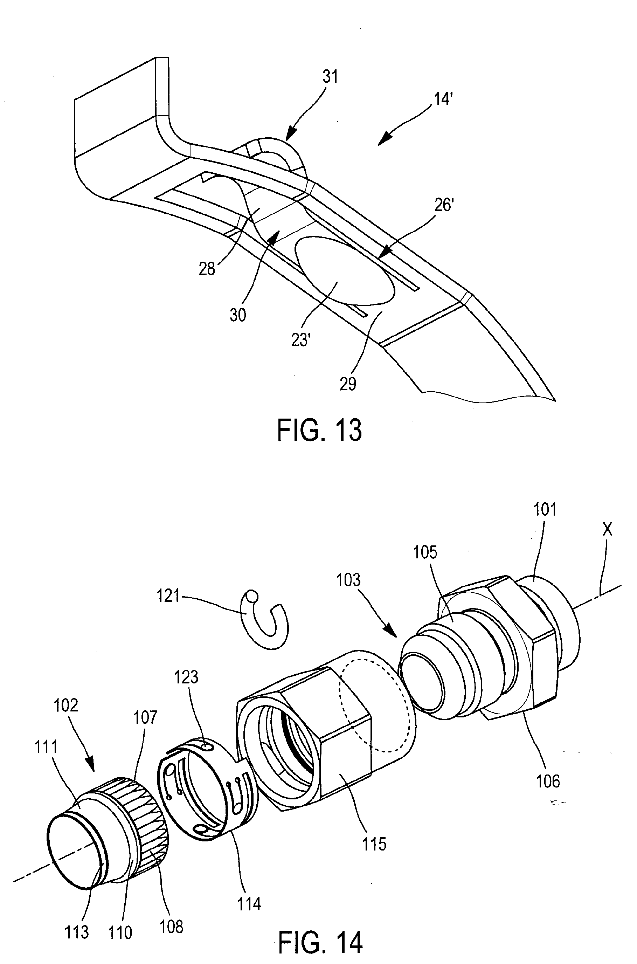

Le second embout 2 comprend une forme extérieure cylindrique 7 pourvue de plusieurs concavités 8 réparties angulairement à la périphérie du second embout, autour de l'axe longitudinal X. Ces concavités désignent toute forme en creux par rapport à un relief (arêtes, dentures, crans) ou à une surface extérieure de l'embout : dans l'exemple illustré ces concavités ont la forme de pans agencés selon une forme polygonale (notamment hexagonale, octogonale, ou décagonale) : la concavité est formée par une zone centrale de chaque pan qui est en retrait vers l'axe de l'embout par rapport aux arêtes du polygone et par rapport à la surface extérieure cylindrique 7 de l'embout 2. Dans des variantes non représentées de l'invention, ces concavités peuvent avoir des formes diverses, telles que des cannelures à profil divers s'étendant suivant l'axe longitudinal de l'embout. Un exemple de variante sera illustré par la suite en référence à la figure 14. Ces concavités sont destinées à accueillir des moyens anti-rotation 14 (figure 4 et 5) qui seront décrits ci-après. A ses extrémités, le second embout 2 comporte par exemple un chanfrein 9, comme cela est prévu à une première extrémité tournée vers le premier embout 1, ou une forme de révolution plus complexe, pourvue de formes(s) torique(s) concave(s) destinée(s) à coopérer en contact avec un ou plusieurs joint(s) torique(s) d'étanchéité(s) et/ou formant butée, d'une ou plusieurs zones cylindriques ou tronconique(s). Dans l'exemple illustré aux figures 2 et 3, le second embout 2 comporte successivement, à partir de la forme extérieure cylindrique 7 et en s'éloignant de la première extrémité, une surface torique concave 10, un tronçon cylindrique 11, et une zone tronconique 12 et un tronçon cylindrique 13. Dans une variante non illustrée, on peut prévoir un unique tronçon cylindrique ou tronconique se raccordant à la forme extérieure cylindrique 7 via la surface torique concave. La forme extérieure cylindrique 7 est la partie du deuxième embout 2 ayant le plus grand diamètre.

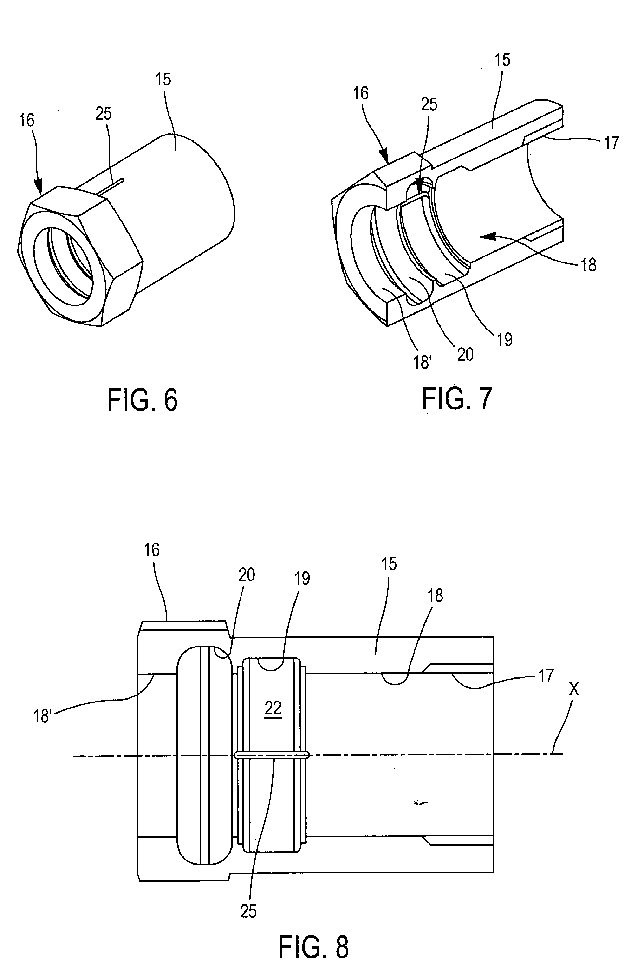

La fixation du premier embout 1 sur le second embout 2 est obtenue par l'intermédiaire d'un écrou 15 qui est installé et emprisonné sur le second embout 2, tout en étant vissé sur le filetage mâle 5 du premier embout 1. Comme le montrent les figures 6 à 8, l'écrou 15 a une forme générale de révolution comprenant à sa périphérie une conformation de prise de rotation 16, typiquement une forme à six-pans, permettant d'entraîner l'écrou 15 en rotation à l'aide d'un outil adapté, en vue de son vissage sur le premier embout 1 alors que ce dernier est immobilisé en rotation à l'aide d'un outil adapté à la conformation de prise de rotation 6 du premier embout 1. La conformation de prise de rotation 16 de l'écrou 15 est située à une extrémité de l'écrou, par exemple l'extrémité opposée au premier embout 1 comme le montrent les figures.

L'écrou comporte un alésage intérieur dans lequel on identifie successivement plusieurs zones fonctionnelles en partant de son extrémité tournée vers le premier embout 1 et en progressant vers son extrémité opposée : un filetage intérieur 17 de l'écrou coopérant avec le filetage mâle 5 du premier embout 1, une première zone cylindrique de guidage 18 épousant sensiblement la forme cylindrique extérieure 7 du deuxième embout 2 afin d'assurer un positionnement et un guidage adéquats de l'écrou 15 sur ce second embout 2, une première gorge 19 de réception des moyens anti-rotation 14 qui seront décrits ci-après, une seconde gorge 20 de forme torique de réception d'un joint torique 21 (figures 2, 11 et 12), et une seconde zone cylindrique de guidage 18' de diamètre sensiblement égal à la première zone cylindrique de guidage 18.

La première gorge 19 comporte un fond 22 cylindrique. Cette gorge reçoit des moyens anti-rotation 14 constitués d'une ou de plusieurs lamelles métalliques identiques (figures 4 et 5), conformée(s) de façon annulaire et cylindrique pour être disposée(s) au fond de la gorge 19 autour du second embout 2. Ces lamelles sont conformées à partir de tôles ou feuillards. La largeur ou hauteur des lamelles suivant l'axe longitudinal X est inférieure à la dimension de la forme dans cette même direction. Dans l'exemple décrit, on prévoit deux lamelles métalliques 14 ayant une épaisseur typiquement inférieure à 5 mm, par exemple de l'ordre de 1 à 2 mm. Dans des variantes de réalisation non illustrées de l'invention, on peut prévoir trois lamelles ou davantage, ou même une seule lamelle ouverte à sa périphérie, afin de pouvoir être introduite dans l'écrou et mise en place dans la gorge 19. Lorsqu'on prévoit plusieurs lamelles, celles-ci sont mises bout à bout pour s'étendre globalement sur la périphérie du second embout 2, sur un secteur angulaire de 360°. Les lamelles 14 sont disposées dans la gorge 19 de manière à être noyées (à l'exception des protubérances 23 décrites ci-après), dans le sens de leur épaisseur, dans la profondeur de la gorge 19, c'est-à-dire suivant une direction radiale par rapport à l'axe longitudinal X. Les lamelles 14 sont donc (à l'exception desdites protubérances 23) sensiblement affleurantes avec les zones cylindriques de guidage 18 et 18'. Les lamelles 14 comportent à leurs extrémités des extensions radiales 24 dirigées vers l'extérieur de l'écrou 15 destinées à être introduites dans des lumières 25 de forme conjuguées formées dans le corps de l'écrou 15. Dans l'exemple illustré, où l'on prévoit deux lamelles 14, deux lumières 25 sont situées dans le fond 22 de la gorge 19, de façon diamétralement opposées. Chacune de ces lumières 25 accueille les deux extensions juxtaposées respectives des deux lamelles 14 mises bout à bout, afin d'assurer leur positionnement correct dans la gorge 19 et de les solidariser en rotation par rapport à l'écrou 15. Il est en effet primordial que ces lamelles 14 ne tournent pas par rapport à l'écrou 15 lors de son vissage sur le premier embout 1.

Selon un aspect essentiel de l'invention, les lamelles 14 comportent des découpes 26 formant des protubérances 23 en direction du second embout 2. Ces protubérances 23 sont destinées à pénétrer radialement et de façon élastique dans les concavités 8 du second embout 2 lorsque les positions angulaires des deux éléments 2, 15 coïncident. Cet embout 2 constitue de ce fait un embout de blocage en ce sens qu'il freine et/ou empêche la rotation de l'écrou 15, en deçà d'un couple rotatif déterminé, de façon à prévenir tout dévissage intempestif. Les protubérances 23 agissent à la façon de pattes élastiques qui s'oppose à tout écartement de leur position naturelle engagée dans les concavités correspondantes. Un couple dépassant un seuil déterminé doit être appliqué à l'écrou par rapport au second embout 2 en vue de son dévissage volontaire, ce qui écarte alors les protubérances de leur position engagée et autorise la rotation de l'écrou. En poursuivant cette rotation d'un angle supplémentaire, chaque protubérance se retrouve à nouveau en vis-à-vis d'une concavité du second embout, ce qui implique son retour élastique vers une position engagée et ainsi de suite.

Les protubérances 23 sont typiquement formées par emboutissage de la matière délimitée par des découpes ayant la forme générale de U, et plus précisément de la matière située entre les branches latérales du U. Les protubérances ont une forme sphérique de manière à faciliter leur sortie des concavités (par un effet de rampe, lorsque les bords des concavités 8 viennent au contact de la base sphérique de la protubérance correspondante et glissent ensuite sur la surface sphérique de cette protubérance, provoquant son déplacement radial). La hauteur des protubérances par rapport à la surface adjacente de la lamelle 14 est par exemple de 1 à 2 mm, et de préférence ne dépasse pas l'épaisseur de la lamelle 14.

On prévoit par exemple entre huit et quatorze concavités régulièrement réparties à la périphérie du second embout 2, et entre quatre et huit protubérances régulièrement réparties sur un secteur angulaire de 360°. Dans le cas illustré page 4 et 5, où l'on a prévu deux lamelles 14, chaque lamelle supporte par exemple trois protubérances, ce qui porte le total à six protubérances 23 autour du second embout 2.

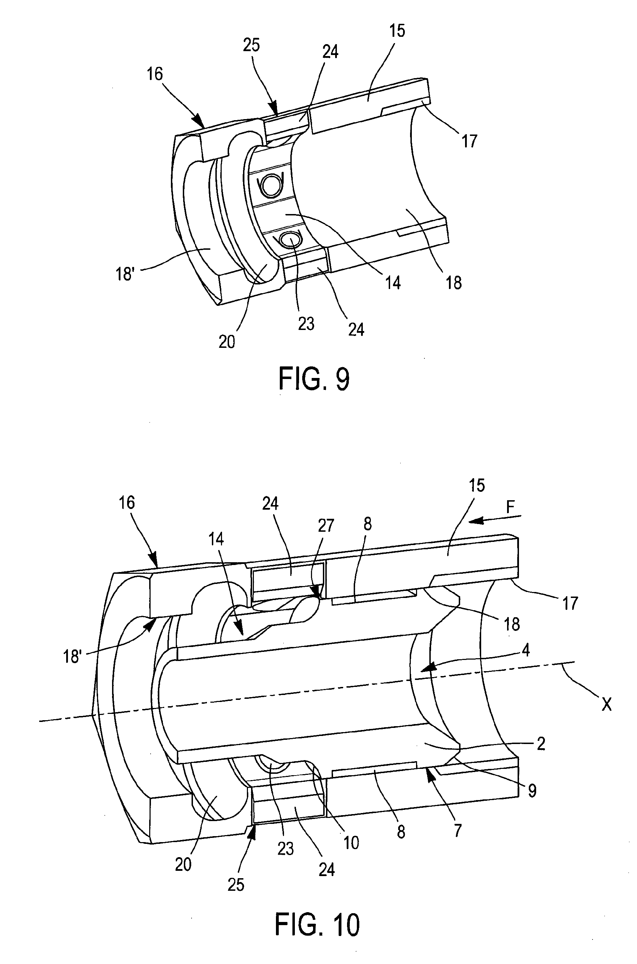

On va maintenant décrire le procédé de montage de l'écrou et de raccordement des embouts 1, 2 en référence aux figures 10 à 12.

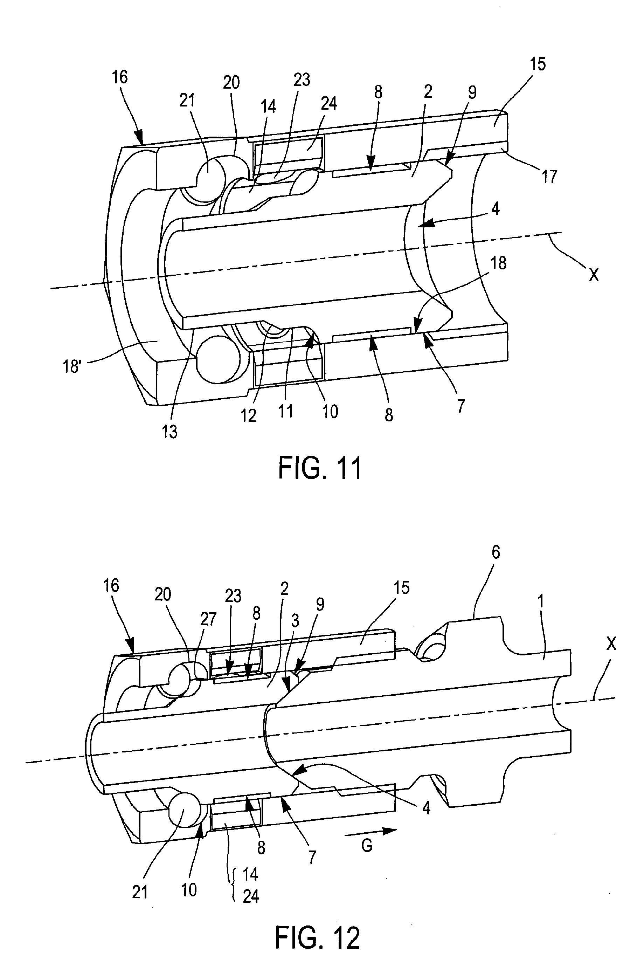

L'écrou 15 est enfilé suivant la flèche F (figure 10) sur le second embout 2, par l'extrémité libre de ce dernier qui est tournée vers le premier embout 1 à raccorder. En effet, on suppose que l'autre extrémité du second embout 2 est raccordée à un tronçon de canalisation, ce qui interdit le montage de l'écrou 15 par se côté. Le guidage de l'écrou 15 sur le second embout 2 est assuré par les zones cylindriques de guidage 18 et 18' de l'écrou 2 et la forme extérieure cylindrique 7 du second embout 2 qui sont relativement ajustées et coopèrent en contact entre elles. Au cours de ce déplacement de l'écrou suivant la flèche F, les lamelles 14 et leurs protubérances 23 surmontent des discontinuités de forme du second embout 2, par exemple le chanfrein 9 situé à la première extrémité du second embout, ainsi que les concavités 8. Les lamelles 14 sont en effet encastrées dans le corps de l'écrou 15 et sont sensiblement affleurantes avec les zones cylindriques de guidage 18, 18'. Les protubérances 23 s'écartent quant à elles radialement de leur position naturelle sous la contrainte de la surface extérieure du second embout 2, de manière à permettre la progression de l'écrou 15 suivant la flèche F. Lorsque l'écrou 15 se trouve dans une position axiale suffisamment avancée par rapport au second embout 2 (figure 11), et qu'une extrémité de l'écrou 15 opposée au premier embout 1 est sensiblement à l'aplomb de la seconde extrémité du second embout 2 qui comporte un diamètre réduit au regard de la surface cylindrique extérieure 7, un espace se dégage et permet l'introduction d'un joint torique 21 dans l'écrou 15, pour sa mise en place dans la seconde gorge 20. Ce joint 21 est ouvert en périphérie pour son installation autour du second embout 2.

Ce joint 21 constitue non seulement un moyen d'étanchéité pour l'assemblage mais forme également une butée emprisonnant l'écrou 15 sur le second embout 2. En effet ce joint est conformé pour épouser la forme torique concave 10 ménagée sur le second embout 2 lorsque l'écrou 15 est déplacé dans le sens inverse, c'est-à-dire dans le sens de la flèche G (figure 12). L'écrou 15 ne peut donc être séparé du second embout 2 lors du vissage de l'écrou 15 sur le premier embout comme illustré à la figure 12. L'écrou se déplace donc par rapport au second embout suivant la flèche G, en étant repoussé par le premier embout 1 lors du vissage, et ceci jusqu'à une position de serrage définitive dans laquelle le second embout 2 est contraint tant par le joint torique 21 que par le premier embout 1. Lors de ce déplacement suivant la flèche G, les protubérances 23 surmontent à nouveau des discontinuités de forme sur la surface extérieure du second embout 2, par exemple l'arête 27 joignant la forme torique concave 10 et la surface cylindrique extérieure de guidage 7. Dans la position de serrage définitive illustrée à la figure 12, les protubérances sont axialement situées au droit des concavités 8, et pénètrent, pour au moins une partie d'entre elles, en reprenant élastiquement leur position naturelle, dans les concavités correspondantes du second embout. Le raccordement ainsi réalisé est sécurisé contre le dévissage intempestif.

Les lumières 25 recevant les extensions 24 des lamelles sont représentées débouchantes à l'extérieur de l'écrou (figures 9 et 10). Pour assurer une étanchéité de l'assemblage, les lumières 25 peuvent être bouchées du côté extérieur de l'écrou par un cordon de soudure.

Dans le deuxième mode de réalisation, les éléments ayant des structures et fonctions similaires portent des références augmentées de 100 par rapport au premier mode de réalisation.

En référence aux figures 14 à 16, un second mode de réalisation du dispositif de raccordement selon l'invention va être décrit uniquement en ce qu'il diffère du premier mode de réalisation. Dans ce second mode de réalisation, le dispositif de raccordement comprend sensiblement les mêmes éléments et une disposition similaire à celle du premier mode. On retrouve dans ce mode tant le premier embout 101, que le second embout 102 et l'écrou 115 pourvu de moyens anti-rotation constitués d'au moins une lamelle 114. La différence essentielle avec le premier mode de réalisation tient au fait que la lamelle n'est pas montée dans une gorge, mais directement sur une troisième zone cylindrique de guidage 118" définie entre la première zone cylindrique de guidage 118 et la seconde zone cylindrique de guidage 118'. La troisième zone cylindrique de guidage 118" est séparée de la première zone cylindrique de guidage 118 par une troisième gorge 132, et de la seconde zone cylindrique de guidage 118' par la seconde gorge 120.

L'exemple représenté aux figures aux figures 14 à 16 comporte une seule lamelle 114 ouverte en un emplacement de sa périphérie, afin de pouvoir être introduite par compression élastique radiale dans l'écrou 115. La lamelle 114 libérée dans l'écrou 115 conserve une compression radiale permettant de plaquer la lamelle 114 dans l'écrou 115. La lamelle 114 comporte en outre au moins une extension axiale 133 coopérant avec au moins une saillie 134 formée à l'intérieur de l'écrou, permettant à la fois le positionnement axial de la lamelle 114 dans l'écrou 115, et d'empêcher toute rotation relative entre la lamelle 114 et l'écrou 115. Dans l'exemple représenté, la lamelle 114 ne comprend pas d'extension radiale, et l'écrou 115 ne comprend pas de lumière. La saillie 134 est positionnée sur la troisième zone cylindrique de guidage 118", et dépasse radialement vers l'intérieur de celle-ci de manière à être sensiblement affleurante avec une face intérieure de la lamelle 114. Dans l'exemple décrit on prévoit une extension axiale 133 s'étendant sensiblement dans le prolongement axial de la lamelle 114, et comporte des orifices 135 de forme complémentaire à celle des saillies 134, qui sont au nombre de trois dans l'exemple. Selon une particularité, l'au moins une saillie 134 est accolée à la troisième gorge 132 pour diminuer l'encombrement axial de l'écrou 115. Dans d'autres variantes non représentées, l'au moins une saillie 134 est disjointe de la troisième gorge 132

La saillie 134 peut avoir différentes formes. Dans l'exemple décrit la saillie a sensiblement une forme en section de cylindre d'axe X, ladite section étant de dimension axiale inférieure à sa dimension périphérique, permettant d'espacer les moyens anti-rotation sur la périphérie de la troisième zone cylindrique de guidage 118"' pour empêcher que sous l'effet du couple l'extension axiale 133 ne passe sur la saillie 134, et/ou ne bloque le deuxième embout 102 dans l'écrou 115. Cette forme de saillie 134 permet d'assurer l'arrêt en rotation de la lamelle 114 sur l'écrou 115 pour des couples importants sans augmenter les dimensions du dispositif de raccordement. Dans l'exemple représenté, l'extension axiale 133 comporte deux orifices 135 collaborant chacun avec une saillie 134.

Dans des variantes non représentées une extension axiale 133 peut coopérer avec deux saillies 134 disjointes, notamment si l'extension axiale est conformée en T faisant saillie axialement de la lamelle 114 et de forme complémentaire aux parties des saillies 134 voisines de l'extension radiale 133. Dans d'autres variantes non représentées, la lamelle 114 peut comporter plusieurs extensions radiales 133 disjointes.

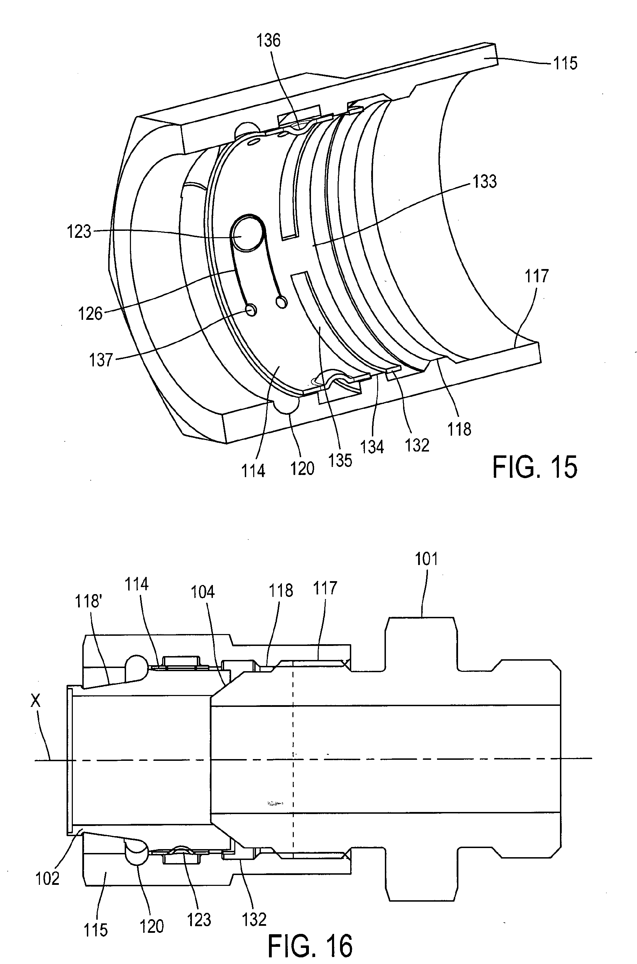

Par ailleurs, comme le montrent les figures 15 et 16, l'écrou 115 peut comporter au moins une entaille intérieure 136 permettant à l'au moins une protubérance 123 de se déplacer radialement vers l'extérieur pour ressortir radialement de l'au moins une concavité 108 lors de la rotation de l'écrou 115 sur le second embout 102. Dans l'exemple représenté, une seule entaille intérieure 136 en forme de gorge est disposée au droit de quatre protubérances 123. Dans des variantes non représentées, l'écrou 115 comporte plusieurs entailles intérieures 136 chacune au droit d'une protubérance, les entailles intérieures 136 pouvant avoir différentes formes permettant à l'au moins une protubérance 123 de ressortir radialement.

On prévoit également que pour chaque découpe ayant la forme générale d'un U formant les protubérances 123, les extrémités des branches du U débouchent dans des trous 137 traversant la lamelle 114. Les trous 137 permettent notamment une meilleure répartition des contraintes mécaniques subies par la lamelle 114 pour diminuer la fatigue élastique de la lamelle 114.

Dans l'exemple de la figure 14, l'embout 102 comprend plusieurs concavités 108 en forme de fraisages suivant l'axe longitudinal de l'embout en retrait vers l'axe de l'embout par rapport à la surface extérieure cylindrique 107 de l'embout 102, lesdits fraisages étant débouchants du côté de l'embout 102 opposé à l'évasement 104. De manière non limitative, le fraisage de l'exemple de la figure 14 est réalisé avec une fraise sphérique formant un fraisage en segment de cercle dans un plan de section normal à l'axe longitudinal X.

Bien entendu, l'invention n'est pas limitée aux moyens qui viennent d'être décrits et comprend tous les équivalents techniques.

En particulier les différentes caractéristiques, formes et variantes de réalisation de l'invention peuvent être associées les unes avec les autres selon diverses combinaisons dans la mesure où elles ne sont pas incompatibles ou exclusives les unes des autres.

En particulier, on peut prévoir que les moyens anti-rotation soient prévus entre l'écrou et le premier embout 1 (non illustré). On peut également prévoir que les lamelles soient montées sur l'un des embouts et que les protubérances pénètrent dans des concavités conformées sur l'écrou.

Par ailleurs, comme le montre la figure 13, chaque lamelle 14' peut avoir une protubérance 23' supportée par une languette 28 elle-même délimitée par une découpe 26' ayant la forme générale d'un U. L'extrémité libre de la languette 28 qui ne supporte pas la protubérance 23' comporte dans cet exemple une forme recourbée par deux pliages successifs, de façon à présenter un bossage dirigé vers l'écrou 15, du côté opposé à la protubérance 23'. La raideur de chaque protubérance s'en trouve augmentée en raison de l'appui de ce bossage sur le fond 22 de la première gorge de l'écrou 22. Cette option sollicite ainsi trois arêtes 29 (à la base de la languette 28), 30 (premier pli du côté de la protubérance 23') et 31 (deuxième pli du côté de l'extrémité libre de la languette 28).

## Revendications

1. Dispositif de raccordement d'un premier embout (1, 101) sur un second embout (2, 102), notamment d'une canalisation, le dispositif comprenant un écrou (15, 115) pourvu à une première extrémité d'un alésage fileté (17, 117) dans lequel est vissé le premier embout (1, 101) suivant un axe longitudinal (X) jusqu'à une position de serrage dans laquelle le premier embout (1, 101) est en contrainte axiale avec le second embout (2, 102) reçu dans l'écrou, cet écrou (15, 115) et le second embout (2, 102) étant conformés pour limiter le déplacement axial de l'écrou (15, 115) par rapport au second embout (2, 102) dans la direction de vissage de l'écrou, **caractérisé en ce qu'**il comprend des moyens anti-rotation disposés entre l'écrou (15, 115) et au moins l'un du premier (1, 101) et du second (2, 102) embouts, dit embout de blocage, ces moyens anti-rotation étant constitués d'au moins une lamelle (14, 114) disposée autour de l'embout de blocage et s'étendant sur un secteur angulaire déterminé autour de l'axe longitudinal (X), ladite lamelle comprenant au moins une protubérance (23, 23', 123) découpée dans son épaisseur, qui est apte à pénétrer radialement et de façon élastique dans au moins une concavité (8, 108), lors de la rotation relative entre l'écrou (15, 115) et l'embout de blocage (2, 102), et à en ressortir lorsqu'un couple rotatif dépassant un seuil déterminé est appliqué entre l'écrou (15, 115) et l'embout de blocage (2, 102), la lamelle (14, 114) et la concavité (8, 108) étant respectivement montées et conformées sur l'écrou (15, 115) et sur l'embout de blocage (2, 102) ou inversement.

2. Dispositif de raccordement selon la revendication 1, **caractérisé en ce que** l'embout de blocage est le second embout (2, 102).

3. Dispositif de raccordement selon la revendication 1 ou 2, **caractérisé en ce que** la lamelle (14, 114) est montée avec une forme arquée à l'intérieur de l'écrou (15, 115) tandis que la concavité (8, 108) est conformée sur la périphérie de l'embout de blocage (2, 102).

4. Dispositif de raccordement selon la revendication 3, **caractérisé en ce qu'**il comprend au moins deux lamelles (14, 114), notamment métalliques, se joignant bout à bout à leurs extrémités et s'étendant globalement sur un secteur angulaire de 360° autour de l'axe longitudinal (X).

5. Dispositif de raccordement selon la revendication 4, **caractérisé en ce que** chaque lamelle (14) comporte à ses extrémités une extension radiale (24) pénétrant dans une lumière (25) correspondante formée dans le corps de l'écrou (15), afin d'empêcher toute rotation relative entre la lamelle (14) et l'écrou (15).

6. Dispositif de raccordement selon la revendication 5, **caractérisé en ce que** chaque lumière (25) est réalisée de façon débouchante entre l'intérieur et l'extérieur de l'écrou (15), la zone débouchant à l'extérieur étant rebouchée par un cordon de soudure.

7. Dispositif de raccordement selon l'une quelconque des revendications 3 à 6, **caractérisé en ce que** l'écrou (15) comporte une gorge intérieure (19) recevant la lamelle (14).

8. Dispositif de raccordement selon l'une quelconque des revendications 3 à 6, **caractérisé en ce que** chaque lamelle (114) comporte une extension axiale (133) coopérant avec au moins une saillie (134) formée à l'intérieur de l'écrou, afin d'empêcher un mouvement relatif entre la lamelle (114) et l'écrou (115).

9. Dispositif de raccordement selon la revendication 8, **caractérisé en ce que** l'extension axiale (133) comporte une région placée entre deux saillies (134).

10. Dispositif de raccordement selon la revendication 8 ou 9, **caractérisé en ce que** l'au moins une saillie (134) est engagée dans une fenêtre de forme correspondante de l'extension axiale (133).

11. Dispositif de raccordement selon l'une quelconque des revendications 8 à 10, **caractérisé en ce que** la lamelle (114) est montée sur une troisième zone cylindrique de guidage (118").

12. Dispositif de raccordement selon l'une quelconque des revendications 8 à 11, **caractérisé en ce que** l'écrou (115) comporte au moins une entaille intérieure (136) permettant à l'au moins une protubérance (123) de se déplacer radialement vers l'extérieur pour ressortir radialement de l'au moins une concavité (108).

13. Dispositif de raccordement selon l'une quelconque des revendications 3 à 12, **caractérisé en ce que** chaque protubérance (23, 23', 123) est délimitée par une découpe ayant la forme générale d'un U, la protubérance (23, 23', 123) étant obtenue par emboutissage, suivant une forme sphérique, de la matière située entre les branches du U, en direction de l'axe longitudinal (X).

14. Dispositif de raccordement selon la revendication 13, **caractérisé en ce que** pour chaque découpe ayant la forme générale d'un U, les extrémités des branches du U débouchent dans des trous (137) traversant la lamelle (114).

15. Dispositif de raccordement selon l'une quelconque des revendications 1 à 14, **caractérisé en ce qu'**il comprend entre quatre et huit protubérances réparties sur un secteur angulaire de 360° par rapport à l'axe longitudinal (X), et entre huit et quatorze concavités conformées pour recevoir lesdites protubérances.

16. Dispositif de raccordement selon l'une quelconque des revendications 1 à 15, **caractérisé en ce que** la lamelle (14, 114) a une épaisseur inférieure à 5 mm, par exemple de 1 à 2 mm, et **en ce que** chaque protubérance (23, 23', 123) s'élève d'une hauteur inférieure à 5 mm par rapport à une zone adjacente de la lamelle, cette hauteur étant par exemple comprise entre 1 et 2 mm.

17. Dispositif de raccordement selon l'une quelconque des revendications 13 à 16, **caractérisé en ce que** chaque protubérance (23') est supportée par une languette (28) délimitée par une découpe ayant la forme générale d'un U, l'extrémité libre de la languette (28) étant recourbée de façon à présenter un bossage dirigé du côté opposé à la protubérance (23').

18. Ensemble comprenant un embout (2,102) et un dispositif de raccordement selon l'une quelconque des revendications précédentes, **caractérisé en ce que** l'embout comporte des concavités (8, 108) ayant la forme de pans agencés selon une forme polygonale.

## Patentansprüche

1. Vorrichtung zum Verbinden eines ersten Anschlussstückes (1, 101) mit einem zweiten Anschlussstück (2, 102), insbesondere einer Rohrleitung, wobei die Vorrichtung eine Mutter (15, 115) aufweist, die an einem ersten Ende mit einer Gewindebohrung (17, 117) versehen ist, in welche das erste Anschlussstück (1, 101) entlang einer Längsachse (X) bis zu einer Spannposition eingeschraubt ist, in welcher das erste Anschlussstück (1, 101) unter axialer Spannung mit dem in der Mutter aufgenommenen zweiten Anschlussstück (2, 102) ist, wobei diese Mutter (15, 115) und das zweite Anschlussstück (2, 102) so ausgebildet sind, dass die axiale Verlagerung der Mutter (15, 115) bezüglich des zweiten Anschlussstückes (2, 102) in Schraubrichtung der Mutter begrenzt wird, **dadurch gekennzeichnet, dass** sie Verdrehsicherungsmittel aufweist, die zwischen der Mutter (15, 115) und dem ersten (1, 101) und/oder dem zweiten (2, 102) Anschlussstück, Sicherungsstück genannt, angeordnet sind, wobei diese Verdrehsicherungsmittel aus zumindest einer Lasche (14, 114) bestehen, die um das Sicherungsstück herum angeordnet ist und sich über einen bestimmten Winkelsektor um die Längsachse (X) herum erstreckt, wobei die Lasche zumindest eine aus ihrer Dicke geschnittene Nase (23, 23', 123) aufweist, die dazu geeignet ist, bei der relativen Drehung zwischen Mutter (15, 115) und Sicherungsstück (2, 102) radial und elastisch in zumindest eine Vertiefung (8, 108) einzudringen und dann daraus auszutreten, wenn ein einen bestimmten Schwellwert übersteigendes Drehmoment zwischen Mutter (15, 115) und Sicherungsstück (2, 102) aufgebracht wird, wobei die Lasche (14, 114) und die Vertiefung (8, 108) jeweils an der Mutter (15, 115) bzw. am Sicherungsstück (2, 102) oder aber umgekehrt angebracht und ausgebildet sind.

2. Verbindungsvorrichtung nach Anspruch 1, **dadurch gekennzeichnet, dass** das Sicherungsstück das zweite Anschlussstück (2, 102) ist.

3. Verbindungsvorrichtung nach Anspruch 1 oder 2, **dadurch gekennzeichnet, dass** die Lasche (14, 114) in Bogenform im Inneren der Mutter (15, 115) angebracht ist, während die Vertiefung (8, 108) am Umfang des Sicherungsstücks (2, 102) ausgebildet ist.

4. Verbindungsvorrichtung nach Anspruch 3, **dadurch gekennzeichnet, dass** sie zumindest zwei, insbesondere metallische, Laschen (14, 114) aufweist, die an ihren Enden auf Stoß zusammentreffen und sich insgesamt über einen Winkelsektor von 360° um die Längsachse (X) herum erstrecken.

5. Verbindungsvorrichtung nach Anspruch 4, **dadurch gekennzeichnet, dass** jede Lasche (14) an ihren Enden eine radiale Erweiterung (24) aufweist, die in einen entsprechenden, im Körper der Mutter (15) ausgebildeten Schlitz (25) eindringt, um jegliches relative Verdrehen zwischen Lasche (14) und Mutter (15) zu verhindern.

6. Verbindungsvorrichtung nach Anspruch 5, **dadurch gekennzeichnet, dass** jeder Schlitz (25) zwischen dem Inneren und dem Äußeren der Mutter (15) ausmündend ausgeführt ist, wobei der nach außen mündende Bereich von einer Schweißnaht verschlossen ist.

7. Verbindungsvorrichtung nach einem der Ansprüche 3 bis 6, **dadurch gekennzeichnet, dass** die Mutter (15) eine innere Nut (19) aufweist, welche die Lasche (14) aufnimmt.

8. Verbindungsvorrichtung nach einem der Ansprüche 3 bis 6, **dadurch gekennzeichnet, dass** jede Lasche (114) eine axiale Erweiterung (133) aufweist, die mit zumindest einem Vorsprung (134) zusammenwirkt, der im Inneren der Mutter ausgebildet ist, um eine Relativbewegung zwischen Lasche (114) und Mutter (115) zu verhindern.

9. Verbindungsvorrichtung nach Anspruch 8, **dadurch gekennzeichnet, dass** die axiale Erweiterung (133) einen zwischen zwei Vorsprüngen (134) positionierten Bereich aufweist.

10. Verbindungsvorrichtung nach Anspruch 8 oder 9, **dadurch gekennzeichnet, dass** der zumindest eine Vorsprung (134) in ein eine entsprechende Form aufweisendes Fenster der axialen Erweiterung (133) eingreift.

11. Verbindungsvorrichtung nach einem der Ansprüche 8 bis 10, **dadurch gekennzeichnet, dass** die Lasche (114) an einem dritten, zylindrischen Führungs-Bereich (118") angebracht ist.

12. Verbindungsvorrichtung nach einem der Ansprüche 8 bis 11, **dadurch gekennzeichnet, dass** die Mutter (115) zumindest eine innere Einkerbung (136) aufweist, die es der zumindest einen Nase (123) gestattet, sich radial nach außen zu verlagern, um radial aus der zumindest einen Vertiefung (108) auszutreten.

13. Verbindungsvorrichtung nach einem der Ansprüche 3 bis 12, **dadurch gekennzeichnet, dass** jede Nase (23, 23', 123) von einem Ausschnitt in U-Form begrenzt wird, wobei die Nase (23, 23', 123) durch Tiefziehen in spährischer Form in Richtung der Längsachse (X) hin aus dem Material, das sich zwischen den Schenkeln der U-Form befindet, hergestellt ist.

14. Verbindungsvorrichtung nach Anspruch 13, **dadurch gekennzeichnet, dass** bei jedem Ausschnitt in U-Form die Enden der Schenkel der U-Form in Löcher (137) münden, welche sich durch die Lasche (114) hindurch erstrecken.

15. Verbindungsvorrichtung nach einem der Ansprüche 1 bis 14, **dadurch gekennzeichnet, dass** sie zwischen vier und acht Nasen, die über einen Winkelsektor von 360° bezüglich der Längsachse (X) verteilt sind, und zwischen acht und vierzehn Vertiefungen aufweist, die dazu ausgebildet sind, die Nasen aufzunehmen.

16. Verbindungsvorrichtung nach einem der Ansprüche 1 bis 15, **dadurch gekennzeichnet, dass** die Lasche (14, 114) eine Dicke von unter 5 mm, beispielsweise von 1 bis 2 mm, aufweist und dass jede Nase (23, 23', 123) sich mit einer Höhe von unter 5 mm bezüglich eines angrenzenden Bereichs der Lasche erhebt, wobei diese Höhe beispielsweise zwischen 1 und 2 mm beträgt.

17. Verbindungsvorrichtung nach einem der Ansprüche 13 bis 16, **dadurch gekennzeichnet, dass** jede Nase (23') von einer Zunge (28) getragen wird, die von einem Ausschnitt in U-Form eingegrenzt wird, wobei das freie Ende der Zunge (28) gekrümmt verläuft, so dass sie eine auf die der Nase (23') entgegengesetzte Seite gerichtete Erhebung aufweist.

18. Einrichtung mit einem Anschlussstück (2, 102) und einer Verbindungsvorrichtung nach einem der vorangehenden Ansprüche, **dadurch gekennzeichnet, dass** das Anschlussstück Vertiefungen (8, 108) mit Seitenflächen aufweist, die in polygonaler Form angeordnet sind.

## Claims

1. Device for the connection of a first end fitting (1, 101) onto a second end fitting (2, 102), in particular of a pipe, the device comprising a nut (15, 115) provided at a first extremity with a threaded bore (17, 117) into which is screwed the first end fitting (1, 101) along a longitudinal axis (X) to a tightened position in which the first end fitting (1, 101) is subject to axial stress with the second end fitting (2, 102) received in the nut, said nut (15, 115) and the second end fitting (2, 102) being formed so as to limit the axial displacement of the nut (15, 115) with respect to the second end fitting (2, 102) in the direction of screwing of the nut, **characterized in that** said device comprises anti-rotation means located between the nut (15, 115) and at least one of the first (1, 101) and second (2, 102) end fittings, called the locking end fitting, said anti-rotation means being constituted by at least one strip (144, 114) located around the locking end fitting and extending over a determined angular sector about the longitudinal axis (X), said strip comprising at least one protrusion (23, 23', 123) cut-out of its thickness, which is capable of entering radially and elastically into at least one concavity (8, 108), during the relative rotation between the nut (15, 115) and the locking end fitting (2, 102), and emerging therefrom when a torque exceeding a predetermined threshold is applied between the nut (15, 115) and the locking end fitting (2, 102), the strip (14, 114) and the concavity (8, 108) being respectively mounted and formed on the nut (15, 115) and on the locking end fitting (2, 102) or vice-versa.

2. Connecting device according to claim 1 or 2, **characterized in that** the locking end fitting is the second end fitting (2, 102).

3. Connecting device according to claim 1 or 2, **characterized in that** the strip (14, 114) is mounted as a bowed shape inside the nut (15, 115) while the concavity (8, 108) is formed on the periphery of the locking end fitting (2, 102).

4. Connecting device according to claim 3, **characterized by** comprising at least two strips (14, 114), in particular made of metal, joining end-to-end at their extremities and extending globally over an angular sector of 360 degree about the longitudinal axis (X).

5. Connecting device according to claim 4, **characterized in that** each strip (14) comprises at its extremities a radial extension (24) entering a corresponding aperture (25) formed in the body of the nut (15), in order to prevent any relative rotation between the strip (14) and the nut (15).

6. Connecting device according to claim 5, **characterized in that** each aperture (25) is produced so as to open out between the inside and the outside of the nut (15), the area opening to the outside being closed by a weld bead.

7. Connecting device according to any of claims 3 to 6, **characterized in that** the nut (15) has an inner groove (19) receiving the strip (14).

8. Connecting device according to any of claims 3 to 6, **characterized in that** each strip (114) comprises an axial extension (133) cooperating with at least one protuberance (134) formed on the inside of the nut, in order to prevent a relative movement between the strip (114) and the nut (115).

9. Connecting device according to claim 8, **characterized in that** the axial extension (133) comprises a region placed between two protuberances (134).

10. Connecting device according to claim 8 or 9, **characterized in that** the at least one protuberance is engaged in a window having a shape corresponding to the axial extension (133).

11. Connecting device according to any of claims 8 to 10, **characterized in that** the strip (114) is mounted on a third cylindrical guidance area (118").

12. Connecting device according to any of claims 8 to 11, **characterized in that** the nut (115) comprises at least one inner notch (136) allowing the at least one protrusion (123) to move radially outwards in order to emerge radially from the at least one concavity (108).

13. Connecting device according to any of claims 3 to 12, **characterized in that** each protrusion (23, 23', 123) is delimited by a generally U-shaped cut-out, the protrusion (23, 23', 123) being obtained by embossing, into a spherical shape, of the material situated between the arms of the U, in the direction of the longitudinal axis (X).

14. Connecting device according to claim 13, **characterized in that** for each generally U-shaped cut-out, the extremities of the arms of the U open out into holes (137) provided through the strip (114).

15. Connecting device according to any of claims 1 to 14, **characterized by** comprising between four and eight protrusions distributed over an angular sector of 360 degree with respect to the longitudinal axis (X), and between eight and fourteen concavities formed for receiving said protrusions.

16. Connecting device according to any of claims 1 to 15, **characterized in that** the strip (14, 114) has a thickness less than 5 mm, for example 1 to 2 mm, and **in that** each protrusion (23, 23', 123) reaches a height of less than 5 mm with respect to an adjacent area of the strip, this height being for example comprised between 1 and 2 mm.

17. Connecting device according to any of claims 13 to 16, **characterized in that** each protrusion (23') is supported by a tab (28) delimited by a generally U-shaped cut-out, the free extremity of the tab (28) being curved so as to present a boss facing the side opposite the protrusion (23').

18. Assembly comprising an end fitting (2, 102) and a connecting device according to any one of the previous claims, **characterized in that** the end fitting comprises concavities (8, 108) having the form of faces arranged in a polygonal shape.
